# EUROPEAN PATENT SPECIFICATION

(11) **EP 2 798 934 B1**
(45) Date of publication and mention of the grant of the patent: **21.02.2018**
(21) Application number: 13166513.5
(22) Date of filing: 03.05.2013
(51) Int. Cl.: A01D 34/416

(54) **Vegetation cutting device**
Vorrichtung zum Scheiden von Vegetation
Dispositif de coupe de végétation

(43) Date of publication of application: 05.11.2014
(73) Proprietor: Black & Decker Inc., Newark, Delaware 19711 (US)
(72) Inventor: Bone, Graham, Carrville, Durham DH1 1LY (GB)
(74) Representative: SBD IPAdmin

(56) References cited:
- EP-A1- 0 417 967
- EP-B1- 1 183 932
- US-A1- 2012 066 913

## Description

The present invention relates to a vegetation cutting device. In particular the present invention relates to a feeding mechanism for a cutting line for a vegetation cutting device.

Vegetation cutting devices such as string trimmers are known power operated tools for cutting grass and other foliage and vegetation. Typically string trimmers are powered by petrol or electricity and an engine or motor drives a cutting head. The cutting head can comprise one or more rotating blades, in which case the trimmer is generally known as a brush cutter or one or more rotating cutting lines, in which case it is known as a string trimmer.

A vegetation cutting device such as a string trimmer comprises a rotating cutting head with a cutting line mounted thereto. Rotation of the cutting head causes the cutting line to rotate which defines a cutting swathe. The cutting line rotates and the leading edge of the cutting line impacts and cuts vegetation. During use of a string trimmer the cutting line can break if the line impacts a hard surface or object.

Known string trimmers can comprise a fixed length of cutting line which is fixed with respect to the cutting head. This means if the cutting line breaks, the user must disassemble the cutting head and manually replace the cutting line. Typically the cutting head can have gripper portions or require a tool remove and replace the cutting line. This can be difficult and cumbersome for the user particularly if the cutting head is heavily soiled.

Other known string trimmers with automatic cutting line feeding mechanisms are also known. Automatic feeding mechanisms do not require the user to replace the cutting line every time a portion of the cutting line breaks off. One such automatic feeding mechanism is disclosed in EP1183932B. EP1183932B comprises a feed mechanism which feeds cutting line when a portion of the cutting line breaks. The feed mechanism comprises a counterweight which balances the free end of the cutting line when the cutting head rotates. If the cutting line breaks, the counterweight is unbalanced against the centrifugal forces of the shortened free end of the cutting line and the counterweight will move and actuate the feeding mechanism. More cutting line will be fed out until the counterweight is balanced against the cutting line and moves to a position whereby the feeding mechanism stops feeding cutting line.

A problem with this automatic feed mechanism is that it can accidentally feed out too much cutting line. Typically there will be one or more "stop positions" which will stop the feeding mechanism. The dynamic conditions on the cutting line and the feeding mechanism will determine whether the cutting line will be fed out. If the feeding mechanism engages the stop position and the cutting line and the feeding mechanism experience excessive vibrations, the feeding mechanism can "jump". This means that in some circumstances the feeding mechanism will feed more line than is actually necessary. In this way the feeding mechanism will waste cutting line and the user will have to replace the spool more often.

Embodiments of the present invention aim to address the aforementioned problems.

In the present invention there is a spool for a rotatable cutting head for a vegetation cutting device comprising: a central portion for receiving a cutting line wound thereon; a flange connected at one end of the central portion wherein the flange comprises an internal track on a base of the flange configured to guide a peg of a cutting line feeding mechanism in a cap of a cutting head, the internal track comprising at least one notch for engaging the peg and preventing relative motion between the cutting head and the spool; and at least one external camming surface on a peripheral edge of the flange, the camming surface configured to engage with a moveable locking mechanism as the spool rotates relative to the cutting head and cause the moveable locking mechanism to move between a release position in which the locking mechanism does not engage the cutting line feeding mechanism and a locked position wherein the locking mechanism engages the cutting line feeding mechanism and limits relative movement between the cutting head and the spool. Preferably the al least one notch is a plurality of notches.

Preferably, the at least one external camming surface is a plurality of external camming surfaces.

Preferably, the number of notches is the same as the number of external camming surfaces.

Preferably, the at least one external camming surface is configured to engage with the moveable locking mechanism before the at least one notch of the internal track is configured to engage with the peg when the spool rotates with respect to the cutting head.

Preferably, the at least one camming surface is configured to disengage with the moveable locking mechanism before the at least one notch of the internal track is configured to engage with the peg when the spool rotates with respect to the cutting head.

Preferably, the external camming surface projects from the flange.

The spool is preferably comprised in a rotatable cutting head for a vegetation cutting device wherein a free end of the cutting line is arranged to exit the cutting head via an opening; a cap comprising a feeding mechanism, the feeding mechanism comprising a peg for engaging with the spool and configured to allow the spool to rotate relative to the cutting head and feed cutting line from the spool when the free end is shorter than a predetermined length; a moveable locking mechanism configured to move between a locking position in which the locking mechanism engages the cutting line feeding mechanism and limits relative movement between the cutting head and the spool and a release position in which the locking mechanism does not engage the cutting line feeding mechanism. Preferably the feeding mechanism comprises a moveable counterweight for balancing centrifugal forces of a predetermined length of the free end of the cutting line, wherein the counterweight is moveable between a balanced position in which the counterweight prevents relative movement of the spool with respect to the cutting head and an unbalanced position in which the counterweight allows relative movement of the spool with respect to the cutting head.

Preferably the counterweight is coupled to the peg and movement of the counterweight causes movement of the peg with respect to the spool.

Preferably the moveable locking mechanism comprises a locking lever for engaging with the counterweight.

Preferably the moveable locking mechanism comprises a guide arm for engaging the external camming surface.

Preferably the guide arm is integral with the locking lever.

Preferably the moveable locking mechanism comprises a pivoting eyelet for receiving the cutting line and the pivoting eyelet is configured to move the moveable locking mechanism between the release position to the locked position.

Various other aspects and further embodiments are also described in the following detailed description and in the attached claims with reference to the accompanying drawings, in which:
Figure 1 shows a perspective view of the vegetation cutting device;
Figure 2 shows a perspective view of the cap with an accessory;
Figure 3 shows a plan view of the cap with the accessory;
Figure 3a shows a perspective view of the moveable eyelet and moveable locking mechanism;
Figure 4 shows a plan view of the cap with the accessory;
Figure 5 shows an exploded perspective view of the accessory and the cap;
Figure 6 shows a plan view of the cap without the accessory;
Figure 7 shows an underneath plan view of the spool;
Figure 8 shows a partial perspective view of the spool accessory; and
Figures 9, 10a, 10b, 11, 12, 13, 14 and 15 show underneath plan views of the spool in different positions.

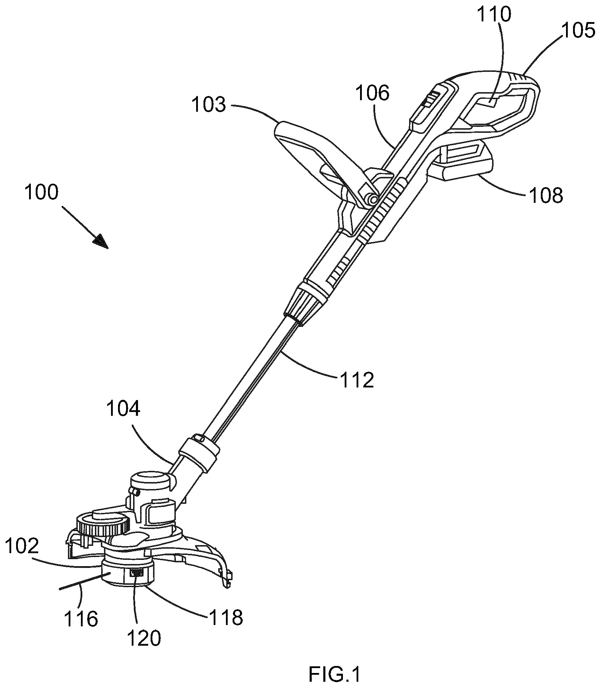

Figure 1 shows a perspective view of a vegetation cutting device or string trimmer 100. Typically the vegetation cutting device 100 is a string trimmer and the term string trimmer will be used hereinafter, but the vegetation cutting device can alternatively be other devices suitable for cutting vegetation. For example the vegetation cutting device can be a lawn mower comprising a cutting line.

In some embodiments the string trimmer 100 comprises a cutting head housing 104 for housing a motor (not shown) and other components. The cutting head housing 104 can comprise two clam shell portions which are fixed together to enclose the motor and other components. A cutting head 102 is rotatably mounted to the cutting head housing 104 and the cutting head 102 connected to the motor via a rotatable drive shaft (not shown). The cutting head comprises a cutting element 116 configured to cut vegetation when the cutting head 102 is rotated. The cutting element 116 in some embodiments is a flexible element or filament and shall be hereinafter referred to as a cutting line 116.

The cutting head housing 104 is connected to a first end of a shaft 112 and a handle housing 106 is connected to a second end the shaft 112. The handle housing 106 comprises a primary handle 105 and a secondary handle 103 mounted on the handle housing 106. The handles 103, 105 are configured so that the user can grip and operate the string trimmer 100. The handle housing 106 can comprises two clam shell portions which are fixed together to enclose circuit boards (not shown). In some alternative embodiments the motor may be housed within the handle housing 106. A battery 108 may be mounted on the handle housing 106 for providing a direct current (DC) voltage to the motor. In some alternative embodiments the string trimmer 100 can be mains powered and the battery 108 is replaced with a power cord (not shown) for providing alternating current (AC) voltage to the motor. The motor is actuated with a trigger switch 110.

The cutting head 102 comprises a cap 118 which is removeable from the cutting head 102 so that the user can install or maintain the cutting string 116. The cap 118 comprises a generally cylindrical wall 130 and a base 140. The cap 118 comprises a pair of resilient tabs 120. The resilient tabs 120 are depressible and when the user depresses the resilient tabs 120, the resilient tabs 120 disengage from the cutting head 102 and allow the user to remove the cap 118.

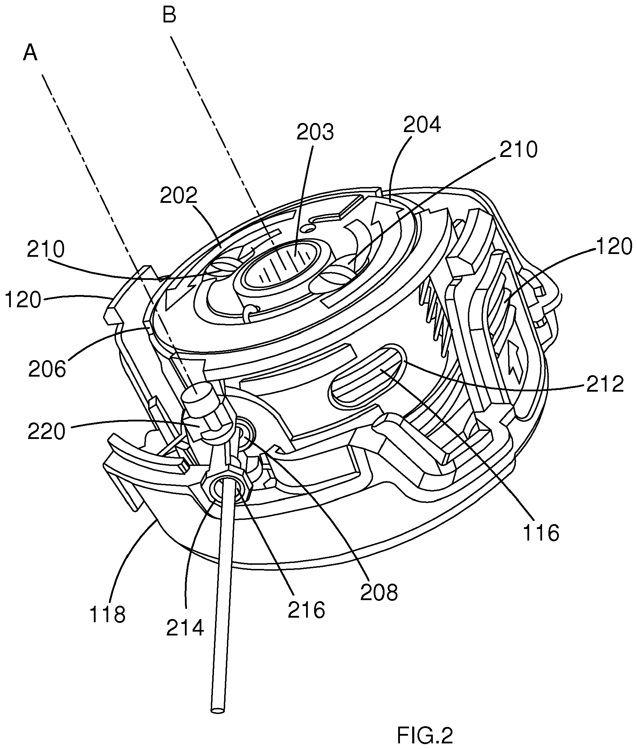

The cap 118 of the cutting head 102 will be described in further detail with respect to Figure 2. Figure 2 shows a perspective view of the cap 118 with a an accessory 202 mounted therein. The accessory 202 is configured to carry and interface with the cutting head 102 to dispense cutting line 116 during use of the string trimmer 100. For the purposes of clarity the accessory 202 will be hereinafter referred to as a spool accessory 202. The spool accessory 202 is mounted on a central spindle 203 of the cap 118. The spool accessory 202 comprises a spool 204 on which the cutting line 116 is wound. The spool 204 is rotatably mounted within a spool sleeve 206. The spool sleeve 206 encases the spool 204 and protects the cutting line 116 before the spool accessory 202 is installed in the cutting head 102. A window 212 in the spool sleeve 206 shows the amount of cutting line 116 which is wound on the spool 204. The spool sleeve 206 is configured to be fixedly mounted with respect to the cap 118. When the spool accessory 202 is installed in the cutting head 102, the spool 204 can rotate with respect to the spool sleeve 206 and the cap 118. As the spool 204 rotates cutting line 116 is dispensed from the spool accessory 202. In some alternative embodiments there is no spool sleeve 206.

The free end of the cutting line 116 projects through a spool eyelet 208 mounted in the spool sleeve 206. The spool eyelet 208 is fixed with respect to the spool sleeve 206. When the spool accessory 202 is installed in the cap 118, the spool eyelet 208 ensures that the free end of the cutting line 116 is positioned in a predetermined orientation when the free end of the cutting line 116 is dispensed from the spool 204.

The spool 204 comprises finger recesses 210 for allowing the user to grip the spool 204 and manually rotate the spool 204 when installing the spool accessory 202.

When the free end of the cutting line projects through the spool eyelet 208, the free end of the cutting line 116 also projects though a moveable eyelet 214 mounted at an opening 216 of the cutting head 102. In some embodiments the moveable eyelet 214 is pivotable. Hereinafter the moveable eyelet 214 will be referred to as a pivoting eyelet 214, but the moveable eyelet may be configured to move in other ways. For example the moveable eyelet 214 may be configured to slide with respect to the cap 118.

The spool eyelet 208 deflects the cutting line 116 such that the cutting line 116 is aligned or substantially aligned with the longitudinal axis of the bore of the pivoting eyelet 214. This means that the cutting line 116 does not exert a turning moment on the pivoting eyelet 214 from the cutting line deviating through an angle from the point the cutting line leaves the spool 204 to the pivoting eyelet 214. Instead the second eyelet 208 deflects the cutting line 116 between the point the cutting line leaves the spool 204 and the pivoting eyelet 214. This means that the cutting line 116 inside the cutting head 102 will not cause the pivoting eyelet 214 to move.

The pivoting eyelet 214 is configured to actuate a moveable locking mechanism 220. In some embodiments the pivoting eyelet 214 is mechanically coupled to the moveable locking mechanism 220 and linkages (not shown) cause the moveable locking mechanism 220 to move when the pivoting eyelet 214 moves. In some other embodiments, the pivoting eyelet 214 is integral with the moveable locking mechanism 220.

The cutting line 116 exits the cutting head 102 at the opening 216 and projects therefrom. The projecting free end of the cutting line 116 sweeps through a plane and defines a cutting swathe when the cutting head 102 rotates. The pivoting eyelet 214 is configured to pivot about an axis A which is parallel or substantially parallel to the axis of rotation B of the cutting head 102. In some embodiments the pivoting eyelet is configured to move in the plane of the cutting swathe. The plane of the cutting swathe is perpendicular or substantially perpendicular to the axis of rotation B.

The pivoting eyelet 214 is configured to pivot when a force is exerted on the free end of the cutting line 116. For example, when a force is exerted on the cutting line 116 in the plane of the cutting swathe, the cutting line 116 will exert a force on the inside wall of the pivoting eyelet 214 and this will cause the pivoting eyelet 214 to rotate. In some embodiments, the pivoting eyelet 214 is configured to rotate when a force on the free end of the cutting line 116 exceeds a predetermined threshold force. In some embodiments the pivoting eyelet 214 is configured to rotate when any force is exerted on the free end of the cutting line 116.

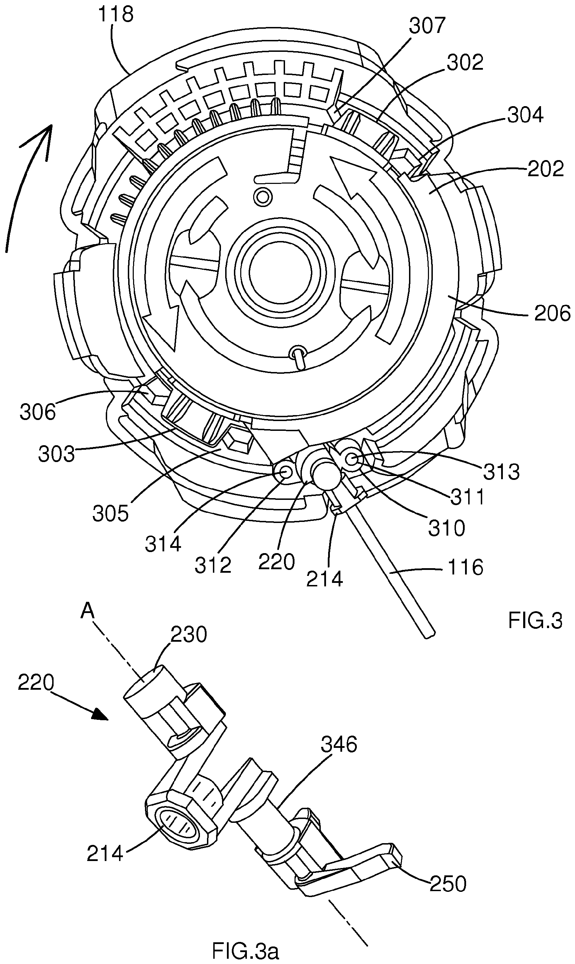

Figure 3 shows a plan view of the cap 118 with the spool accessory 202 installed therein. The spool sleeve 206 comprises engaging tabs 302, 303 which slot between upstanding fingers 304, 305, 306 and 307 of the cap 118. The engaging tabs 302, 303 and the upstanding fingers 304, 305, 306, 307 provide a friction fit between the spool sleeve 206 and the cap 118 and the spool sleeve 206 and the cap 118 are fixed with respect to each other.

The moveable locking mechanism 220 is mounted at the opening 216 with a mounting clip 310. The mounting clip 310 comprises two holes 311, 312 for receiving two mounting pegs 313, 314 of the cap 118. The mounting pegs 314 are integral with the cap 118 and the mounting clip 310 is fixed with respect to the cap 118 when the mounting pegs 313, 314 are located in the mounting holes 311, 312. The mounting clip 310 comprises a pair of resilient arms 342, 344 which clip around a neck portion 346 of the moveable locking mechanism 220. The mounting clip 310 allows the moveable locking mechanism 220 to rotate but also keeps the moveable locking mechanism 220 rotatably coupled to the cap 118. In some embodiments the mounting clip is integral or coupled to the spool sleeve instead. This means that the locking mechanism 220 is part of the spool accessory 202 and the cutting line 116 can be already threaded in the pivoting eyelet 214. This means that the user would not have to thread the cutting line 116 on installation of the spool accessory 202.

The moveable locking mechanism 220 and moveable eyelet 214 are shown in Figure 3a. The moveable locking mechanism 220 is connected to the pivoting eyelet 214. Figure 3a shows the moveable locking mechanism 220 being integral with the pivoting eyelet 214. In some embodiments (not shown) the pivoting eyelet 214 is a separate element and is mechanically coupled to the moveable locking mechanism 220 such that movement of the pivoting eyelet 214 causes movement of the locking mechanism 220. In some alternative embodiments, the pivoting eyelet 214 is not present.

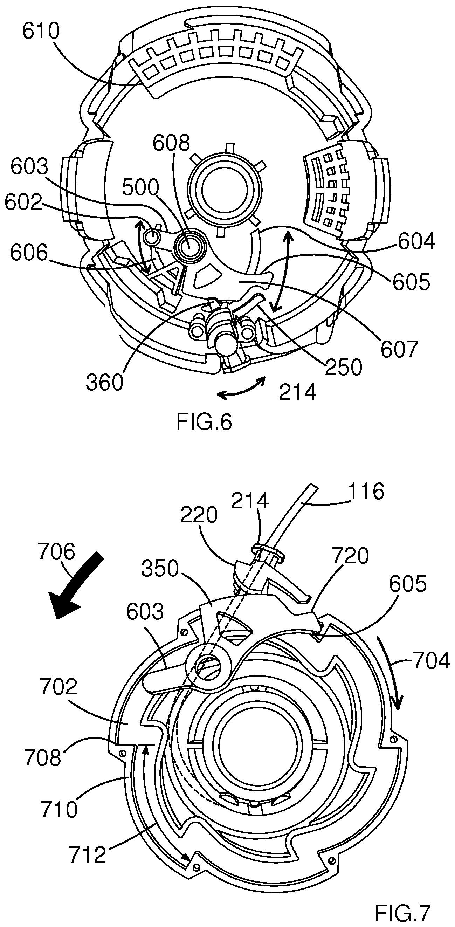

In some embodiments the pivoting eyelet 214 is mounted towards an upper end 230 of the moveable locking mechanism 220 which is furthest from the base 140 of the cap 118 when the moveable locking mechanism 220 is mounted in the cap 118. In other embodiments the pivoting eyelet 214 can be located at any position along the longitudinal length of the moveable locking mechanism 220. The pivoting eyelet 214 is configured to receive the free end of the cutting line 116. The moveable locking mechanism 220 is generally longitudinal along an axis A and is configured to rotate about the longitudinal axis A. In some embodiments the moveable locking mechanism 220 is configured to pivot about axis A when the pivoting eyelet 214 pivots. The centre of mass of the moveable locking mechanism 220 is aligned with the axis of rotation of the moveable locking mechanism 220. This means that the centre of mass of the moveable locking mechanism 220 does not move with respect to the cap 118 when the moveable locking mechanism 220 rotates. In this way the moveable locking mechanism 220 can be balanced with a fixed counterweight 610 (shown in Figure 6) on the opposite side of the cap 118 to where the moveable locking mechanism 220 is mounted. Aligning the centre of mass of the pivoting eyelet 214 with its axis of rotation also means that there is no turning moment of parts of the moveable locking mechanism 220 itself about the axis of rotation A when the cutting head 102 is rotating.

The neck portion 346 of the moveable locking mechanism 220 is located approximately midway and is configured to mate and couple with the resilient arms 344, 342 of the mounting clip 310.

A locking lever 250 protrudes from the base of the moveable locking mechanism 220. The locking lever 250 is configured mechanically couple and engage with the line feeding mechanism 350. A guiding arm 360 also protrudes from the base of the moveable locking mechanism 220. The guiding arm 360 is configured to mechanically engage with an external camming surface 370 on the spool 204. The locking lever 250 and the guiding arm 360 are offset from each other along the longitudinal axis A of the moveable locking mechanism 220. In some embodiments the locking lever 250 and the guiding arm 360 are offset from each other by the depth of the lower flange 330 on the spool 204.

Returning to Figure 3, an arrow on Figure 3 shows the rotational direction in which the cutting head 102 rotates during operation. Figure 3 shows the pivoting eyelet 214 in a "neutral" position when the cutting head 102 is rotating and no external forces are incident on the free end of the cutting line 116. In this way the centrifugal force on the cutting line 116 urges the cutting line 116 radially outwards from the axis of rotation B of the cutting head 102. In the neutral position the pivoting eyelet 214 is substantially orientated so that the longitudinal axis of pivoting eyelet is tangential to or tangentially parallel to the point where the cutting line is dispensed from the spool 204. This means that the turning moment of cutting line 116 as the cutting line 116 exits the spool eyelet 208 about the pivoting eyelet 214 is minimised.

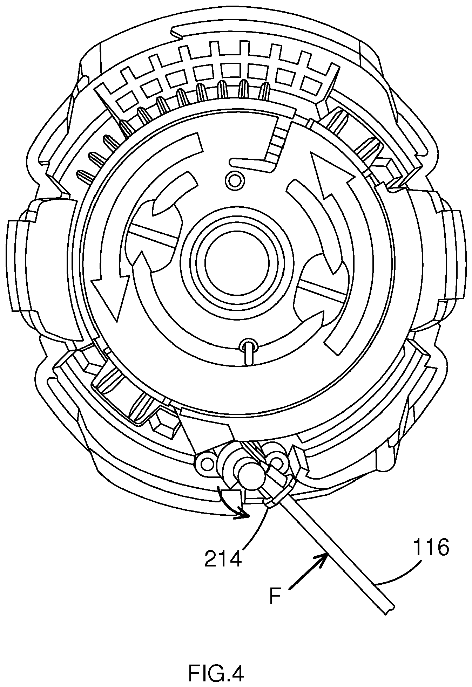

Reference will now be made to Figure 4 which shows the cap 118 with the spool accessory and the pivoting eyelet 214 in another orientation. Figure 4 is the same as Figure 3 except that the pivoting eyelet 214 is in a deflected position. The deflection of the pivoting eyelet 214 can be caused by an external force, e.g. the cutting line 116 hitting a rigid object in the path of the cutting line 116. A force F has been exerted on the free end of the cutting line 116 substantially opposite to the direction of rotation (as shown in Figure 3) and in the plane of the cutting swathe. The force on the cutting line 116 has urged the pivoting eyelet 214 away from the neutral position. In this way the pivoting eyelet 214 has rotated about the pivoting eyelet axis of rotation A anticlockwise. The pivoting eyelet 214 is integral with the moveable locking mechanism 220 and movement of the pivoting eyelet 214 between the neutral position and the deflected position causes the locking lever 250 of the moveable locking mechanism 220 to pivot between a locked position and a release position.

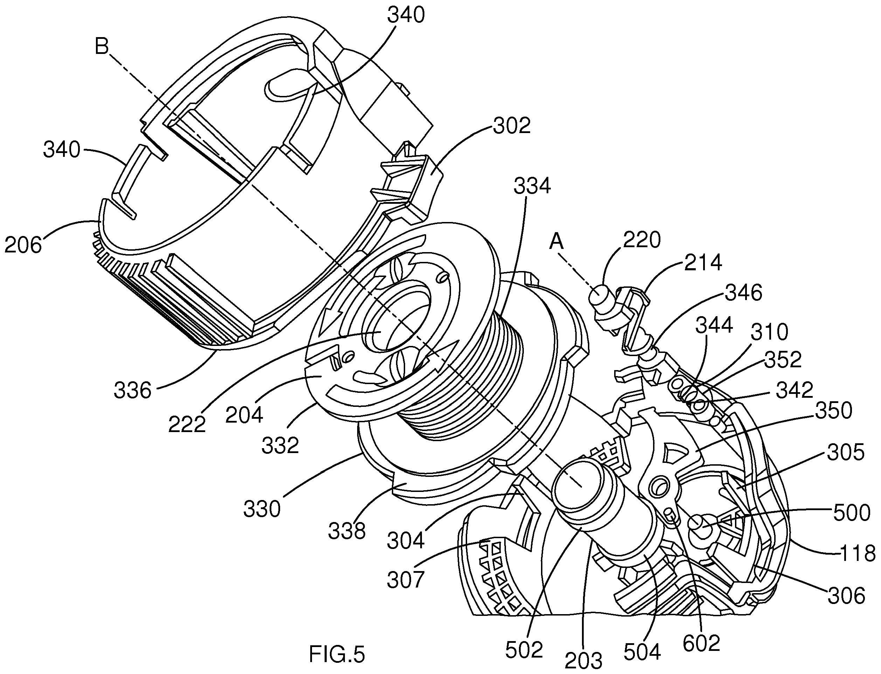

Reference is briefly made to Figure 5 which shows an exploded perspective view of the cap 118 and the spool accessory 202. The spool 204 comprises a lower flange 330 which comprises a larger effective diameter than an upper flange 332. The lower flange 330 can comprise non-circular cross section as shown in Figure 5. Figure 5 shows an external camming surface 370 on the periphery of the lower flange 330. The external camming surface is configured to engage with the guide arm 360 of the moveable locking mechanism 220. In some embodiments there is at least one camming surface 370 with a varying radial distance from the axis of rotation B of the spool. The external camming surface 370 projects from the peripheral edge of the lower flange 330 of the spool 202. In some other embodiments the external camming surface 370 comprises a plurality of discrete sections, each section comprises a camming surface with a varying radial distance from the axis of rotation B of the spool. The boundary between the discrete camming sections are separated by a vertex 380 and a cliff portion 390. The cliff portion 390 changes the radial distance of the camming surface from a maximum radial distance at the vertex 380 to a minimum radial distance at another vertex 392. In some embodiments the external camming surface 370 projects beyond the upper flange 332. This means that the external camming surface 370 is the part of the spool with the largest effective diameter of the spool 204. As previously mentioned the camming surface 370 varies between a maximum radial distance at the vertex 380 and a minimum radial distance at the other vertex 392. The maximum radial distance of the camming surface is the point on the camming surface 370 which engages the guiding arm 360 and pivots the guiding arm 360 through its greatest extent. The minimum radial distance of the camming surface 370 is the point whereby the camming surface does not engage the guiding arm 360.

In some embodiments the spool 204 comprises a central portion 334 which has a plurality of grooves. The grooves aid winding the cutting line 116 onto the central portion 334 of the spool 204. When assembled, the spool sleeve 206 sits over the spool 204 such that a lower lip 336 abuts and rotates against an annular surface 338 on the lower flange 330. The annular surface 338 is achieved by making the external camming surface 370 have a larger effective diameter than the central portion 334 or the upper flange 332. This means that the camming surface 370 of the spool projects closer towards the moveable locking mechanism 220. In this way the moveable locking mechanism 220 can be smaller and more compact and the moveable locking mechanism 220 is more robust. The spool sleeve 206 is coupled to the spool 204 by resilient clips 340 of the spool sleeve 206. When the spool sleeve 206 is seated on the spool 204, the resilient clips 340 deflect around the upper flange 330 and snap back to their original position and lock underneath the upper flange 332 of the spool 204, preventing accidental separation of the spool sleeve 206 from the spool 204. The spool 204 comprises a central bore 222 though which the spindle 203 of the cap 118 is threaded when the spool accessory 202 is installed in the cap 118.

Ferrules 502, 504 are located within a central bore 222 of the spool accessory 202 and are configured to axially locate the spool accessory 202 on the spindle 203. The ferrules 502, 504 reinforce the spindle 203 and limit the amount the spindle moves with respect to the central axis of the cutting head 102. This reduces wear on the spindle 203.

Figure 5 also shows a feeding mechanism 350. The feeding mechanism 350 is better shown in Figure 6 which shows a plan view of the cap 118 without the spool accessory 202. The feeding mechanism 350 comprises a first pivotable arm 603 and a second pivotable arm 605 mounted either side of a pivot hole 608. The pivot hole 608 is configured to receive a protrusion 500 integral with the cap 118. The feeding mechanism 350 is pivotally mounted on protrusion 500. The protrusion 500 may comprise a metal washer for reducing wear between the protrusion 500 and the pivot hole 608. The first pivotable arm 603 comprises a peg 602 for cooperating and travelling in a reciprocal track 702 on the spool 204. The internal track 702 is on the underside of the lower flange 330. This means that when the spool accessory 202 is installed in the cutting head, the lower flange 330 of the spool 204 is adjacent to the base 140 of the cap 118. This means that the feed mechanism 350 and the internal track 702 of the spool 204 can be very compact. Since the feed mechanism 350 is mounted in the cap 118, the cap 118 can be easily replaced.

The peg 602 may comprise a metal cap for reducing wear between the track 702 and the peg 602. The peg 602 is configured to run in a track 702 on the spool accessory 202 which is described in further detail with reference to Figure 7 below. The second pivotable arm 605 extends in a substantially opposite direction to the first pivoting arm 603. The second pivotable arm comprises a counterweight 607. The counterweight 607 is configured to balance against the cutting line 116. The counterweight can be any suitable shape, size, material of sufficient mass to balance the mass of the cutting line 116. The first and second pivotal arms 603, 605 are capable of pivoting through arcs as indicated by arrows in Figure 6.

The cap 118 comprises ribs 604, 606 for guiding the feeding mechanism 350 when the feeding mechanism 350 pivots about protrusion 500. The feeding mechanism 350 is configured to pivot about the protrusion 500 and arrows show the direction in which the feeding mechanism 350 and the moveable locking mechanism 220 can pivot. The amount of deflection of the feeding mechanism 350, the location of the peg 602 in the track 702 and the position of the moveable locking mechanism 220.

The moveable locking mechanism 220 will be described in reference to Figures 7 to 15 below.

In order to describe the moveable locking mechanism 220 in further detail reference will first be made to the line feeding mechanism 350 as shown in Figure 7. Figure 7 shows an underneath plan view of the spool 204 but for the purposes of clarity, does not show the cap 118 or the protrusion 500 or the mounting clip 310.

The underside of the line feeding mechanism 350 is shown in Figure 7. Although not visible in Figure 7, the peg 602 is located within the track 702 of the spool 204. As mentioned previously, the counterweight 607 is for balancing a predetermined length of cutting line 116 when the cutting head 102 is in use. The predetermined length of cutting line 116 is a length of line below which, more cutting line 116 is fed out. Typically the predetermined length of cutting line will be long enough to still cut some vegetation. More cutting line 116 is fed out if the counterweight 607 and the cutting line 116 are not balanced.

When the spool accessory 202 is mounted on the cap 118 the spool accessory 202 is slid on to the spindle 203 and the spindle 203 passes through a bore 222 in the spool 204. The peg 602 coupled to the first pivotal arm 603 locates in a track 702 in the base of the lower flange 332 of the spool 204 as shown in Figure 7. In order to locate the peg 602 in the track 702, the user can manually rotate the spool 204 using the recesses 210. This rotates the spool 204 with respect to the spool sleeve 206 until the peg 602 slots into the track 702.

When the cutting head 102 is rotating, the free end of the cutting line 116 will experience a centrifugal force which will urge the free end of the cutting line 116 outwards away from the spool 204. As the cutting line 116 is urged off the spool 204 and the spool 204 will tend to unwind. The spool 204 will be biased to rotate clockwise as shown by arrow 704 in Figure 7. The rotation of the spool 204 is relative to the cutting head 102 itself which is also rotating. The direction of rotation of the cutting head 102 is shown by arrow 706.

In other words the centrifugal force exerted on the free end of the cutting line 116 generates an "unwinding force" which acts on the spool 204. This results in the cutting line 116 trying to unwind and causing the spool 204 to rotate clockwise as shown in Figure 7. The spool 204 rotates relative to the peg 602. Whilst the spool 204 is capable of rotating about the spindle 203, the rotation of the spool 204 is restricted by the interaction of the peg 602 in the track 702. The track 702 guides the position of peg 602 as the spool 204 rotates relative to the peg 602 and the cutting head 102.

When the cutting head 102 rotates, the first and second pivotal arms 603, 605 pivot due to centrifugal force on the counterweight 607. Since the counterweight 607 is integral with the first pivotable arm 603, the peg 602 moves when the counterweight 607 moves. The counterweight 607 experiences centrifugal force because the cutting head 102 is rotating and will be urged towards the periphery of the spool 204 as shown in Figure 7. As the counterweight 607 pivots and moves towards the periphery of the spool 204, the peg 602 moves towards the centre of the spool 204.

However, the peg 602 stops the cutting line 116 unwinding when the peg 602 abuts a notch 708 in the track 702. In some embodiments the track 702 comprises at least one notch 708. The notch 708 is a position in the track 702 which stops the spool 204 rotating relative to the peg 602 and the cutting head 102 because the peg 602 engages with the surface of the notch 708. The peg 602 and track 702 form a ratchet and pawl arrangement. In some embodiments the track 702 can comprises a plurality of notches 708. As the peg 602 moves in the track 702 between notches 708, the spool 204 rotates relative to the cutting head 102 and cutting line 116 is fed out. The spacing between the notches determines the amount of line that is fed out. In some embodiments the effective distance between the notches is 2.54cm. That is 2.54cm of cutting line is fed out when the peg 602 moves between 2 nothches 708. In this way the portion 712 of track between notches 708 corresponds to a feeding position.

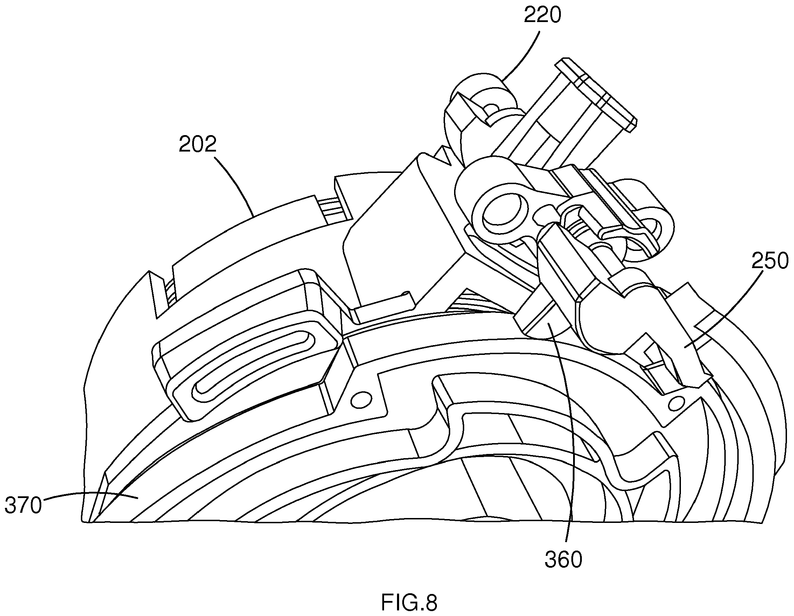

Reference is now made to Figure 8 which shows a partial perspective view of the spool accessory 202 with the moveable locking mechanism 220. Figure 8 shows the guiding arm 360 engaging with the external camming surface 370 of the spool 204. As the external camming surface 370 rotates with respect to the guiding arm 360, the moveable locking mechanism 220 rotates. In this way the interaction between the guiding arm 360 and the external camming surface 370 also causes the locking lever 250 to rotate. In some embodiments however, the pivoting eyelet 214 is not used and only the guiding arm 360 and the camming surface 370 cause the moveable locking mechanism 220 to rotate.

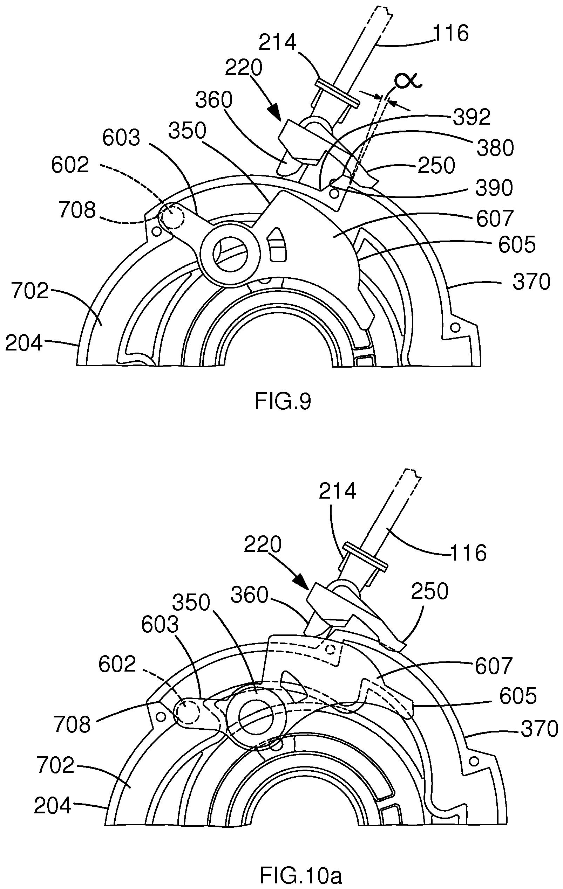

The relationship between the moveable locking mechanism 220 and the feeding mechanism 350 will now be described in operation in reference to Figures 9 to 14.

Figure 9 shows a schematic underneath plan view of the spool 204. Similar to Figure 7, the cap 118 and other components have been omitted from Figure 9 for the purposes of clarity. The free end of the cutting line 116 is partially represented for clarity and is threaded through the pivoting eyelet 214. No external forces are incident on the cutting line 116 and so the pivoting eyelet 214 is in the neutral position. The locking lever 250 of the moveable locking mechanism 220 is shown in the release position. The release position refers to a position whereby the locking lever 250 does not obstruct the path of the line feeding mechanism 350. This means that the first and second arms 603, 605 of the line feeding mechanism 350 can freely pivot about protrusion 500.

As shown in Figure 9, the peg 602 of the line feeding mechanism 350 abuts the notch 708 in the track 702. The track 702 comprises a plurality of notches and the peg 602 will abut each notch as the spool 204 and track 702 rotates relative to the peg 602. The plurality of notches divide the track 702 up in to a plurality of discrete sections along which the peg 602 can travel. In some embodiments there can be any number of notches dividing up the track 702. Each discrete section of track allows the spool 204 to rotate a predetermined amount. The peg 602 travelling along a single track section corresponds to the minimum cutting line length which can be fed when the feeding mechanism is actuated.

The notch 708 is held in engagement with the peg 602 due to the centrifugal force generated by the cutting head 102 rotating. The peg 602, by virtue of the counterweight 607 generates a "biasing force" which acts on the spool 204 between the peg 602 and the notch 708 and opposes the unwinding force. When the cutting line 116 breaks or wears, the mass of the free end of the cutting line 116 is reduced. This means that the free end of the cutting line 116 is below a threshold feed length. This means that the unwinding force applied to the spool 204 by the free end of the cutting line 116 is reduced due to the reduction in the centrifugal force generated by the smaller mass of the shorter free end of the cutting line 116. At this point the biasing force of the counterweight 607 becomes greater than the unwinding force of the spool 204 and the counterweight 607 pivots such that the counterweight 607 is adjacent the periphery of the spool 204. As cutting line 116 is wound off and the spool 204 rotates with respect to the cutting head 102, the spool 204 will rotate clockwise as shown in Figure 9.

In Figure 9 the guiding arm 360 is not in engagement with the external camming surface 370. This means that the moveable locking mechanism 220 is free to pivot and move between the release position and the locked position.

Figure 10a shows a schematic underneath plan view of the spool 204. Figure 10a is the same as Figure 9 except that the line feeding mechanism 350 has partially pivoted such that the second pivotable arm 605 is adjacent the outer periphery of the spool 204. In addition the feeding mechanism 350 is represented with a partial opacity so that the underlying peg 602 and track 702 are also visible. At the same time the first pivotable arm 603 pivots towards the centre of the spool 204. Figure 10a shows the peg 602 is still just in engagement with the notch 708. At this point the engagement of the notch 708 with the peg 602 still prevents the spool 204 from moving relative to the cutting head 102 in the unwinding direction. If the peg 602 moves any further towards the centre of the spool 204, the peg 602 will be free to move in the track 702 until it reaches the next notch 708. The guiding arm 360 is not in engagement with the external camming surface 370.

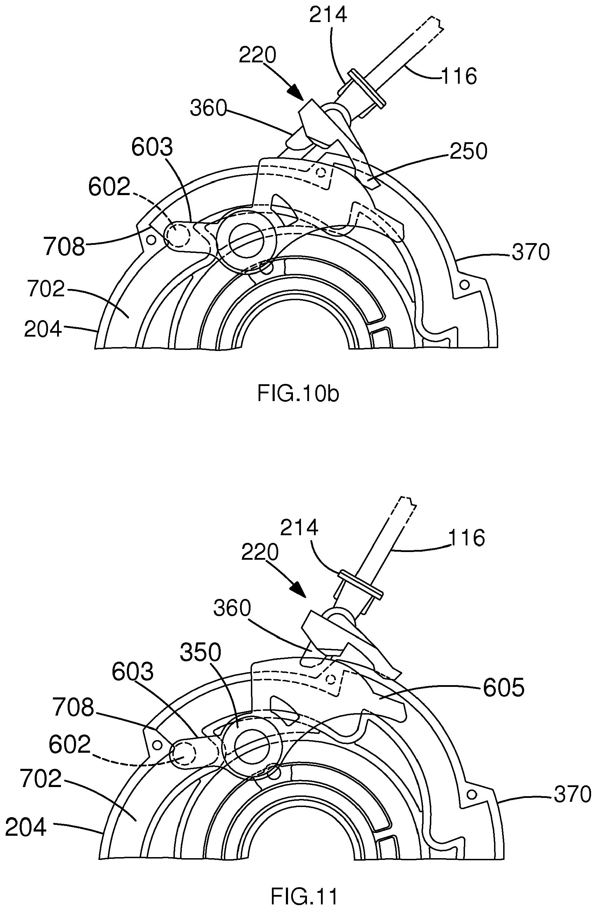

Figure 10b shows a schematic underneath plan view of the spool 204. Figure 10b shows the locking lever 250 in the locked position. In this way when the locking lever 250 is in the locked position, the feeding mechanism 350 cannot pivot towards the periphery of the spool 204 and the peg 602 remains in engagement with the notch 708.

In some embodiments the flat surface of the notch 708 is not in a completely radial direction and forms an angle with the outer wall 710 of the spool 204 slightly towards the direction of rotation of the cutting head 102. The surface of the notch deviates by an angle α from a radial direction. This means that the spool 204 must rotate slightly anticlockwise for the peg 602 to move towards the centre of the spool 204 to become disengaged. This means that the peg 602 is less likely to accidently feed line. The spool 204 shown in Figure 10a has moved anticlockwise slightly compared to the spool 204 as shown in Figure 9. Since the spool has moved anticlockwise, the camming surface 370 moves with respect to the guiding arm 360. The cliff portion 390 of the external camming surface 370 moves away from the guiding arm 360. This means that a space between the external camming surface 370 and the guiding arm 360 and the guiding arm 360 can pivot without engaging the external camming surface 370.

Figure 11 shows a schematic underneath plan view of the spool 204. Figure 11 is the same as Figure 10 except that the line feeding mechanism 350 has pivoted through its full extent such that the second pivotable arm 605 is adjacent the outer periphery of the spool 204. The peg 602 is then able to move in the track 702 and along the surface of the notch 708. As this happens the first pivotable arm 603 will pivot towards the centre of the spool 204 and the peg 602 will move of contact with the notch 708. At this point the second pivotable arm 605 may be adjacent to or engaging with the locking lever 250. In some other embodiments, the second pivotable arm 605 may be distal from the locking lever 250 or touching the locking lever 250 when the second pivotable arm 605 is at its furthest point from the centre of the spool 204, as shown in Figure 11. The guiding arm 360 is not in engagement with the external camming surface 370 at this point. The spool 204 as moved slightly clockwise as the peg 602 is guided through the track 702 with respect to Figure 10a.

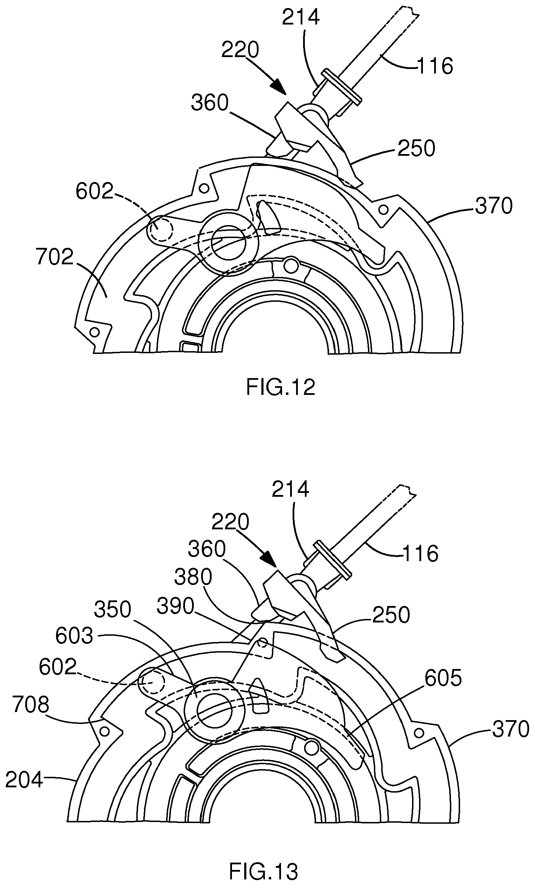

Figure 12 shows a schematic underneath plan view of the spool 204. Figure 12 is the same as Figures 9, 10 and 11 except that the peg 602 is freely moving in the track 702. Figure 12 shows the peg 602 after disengaging with the notch 708. The spool 204 has rotated clockwise about 30 degrees with respect to the spool 204 shown in Figure 11. Here the spool 204 is able to rotate freely with respect to the cap 118 and the spool sleeve 206. This means that the spool 204 feeds out more cutting line 116 as it moves relative to the cap 118. The peg 602 will continue moving in the track 702 and will abut against another notch 708.

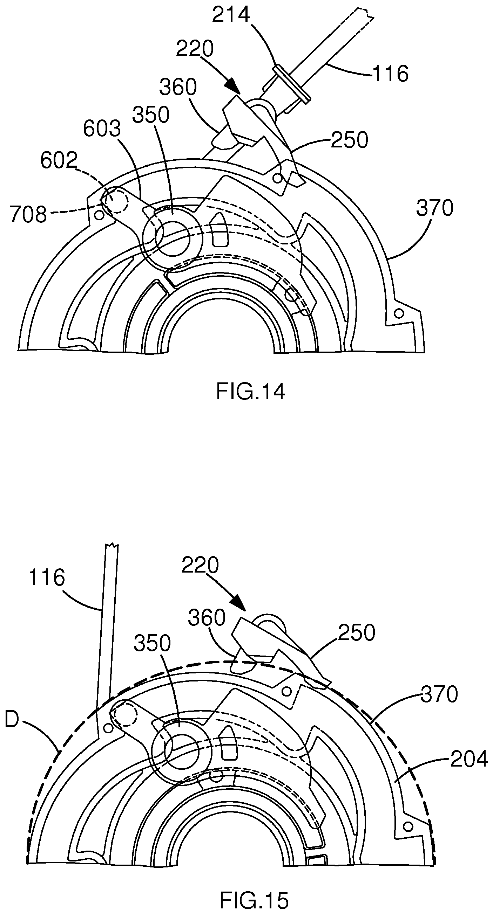

Figure 12 shows the guiding arm 360 starting to engage with the external camming surface 370. The external camming surface 370 varies in radial distance in a circumferential direction, that is the distance between the external camming surface and the centre of the spool varies. As the spool 204 rotates, the external camming surface 370 comes into contact with the guiding arm 360 and then causes movement of the guiding arm 360 away from the centre of the spool 204. As the guiding arm 360 is urged away from the centre of the spool 204, this causes a rotational force on the moveable locking mechanism 220. The guiding arm 360 and the locking lever 250 are integral and as the guiding arm pivots, so does the locking lever 250. Figure 12 shows that the pivoting eyelet 214 is integral with the moveable locking mechanism 220. This means that the pivoting eyelet 214 will also pivot as a result of the interaction of the guiding arm 360 and the external camming surface 370. However in some embodiments the guiding arm 360 and the locking lever 250 can be separate from the pivoting eyelet 214. Indeed, the pivoting eyelet 214 does not need to be mechanically coupled to the guiding arm 360. Furthermore in some embodiments, the eyelet from which the cutting line 116 projects from the cutting head 102 is fixed and does not move. For example, Figure 15 shows one embodiment without a pivoting eyelet. Furthermore, in other embodiments the guiding arm 360 can be separate from the locking lever 250 but the guiding arm 360 is mechanically coupled to the locking lever 250 by e.g. linkages. In some embodiments the there is any means suitable for actuating the guiding arm to lock the feeding mechanism 350.

Figure 13 shows a schematic underneath plan view of the spool 204. Figure 13 is the same as Figures 9, 10, 11 and 12 except that the moveable locking mechanism 220 has moved into the locked position. Figure 13 shows the spool 204 which has rotated clockwise by about 20 degrees with respect to the spool 204 shown in Figure 12. Figure 13 shows the peg 602 is freely moving in the track 702. The peg 602 will continue to move in the track 702 until it abuts against the notch 708.

The guiding arm 360 is still just in engagement with the external camming surface 370 at vertex 380. The vertex 380 is formed from a cliff portion 390 of the camming surface reducing the radial distance of the camming surface 370 to the centre of the spool 204 over a short distance. The cliff portion 390 is the boundary between the end of one camming surface 370 and the beginning of the next camming surface. The guiding arm 360 has been urged to its maximum distance away from the centre of the spool 204. At the same time the locking lever 205 has been pivoted into the locking position. The locking lever 250 will block the second pivotable arm 605 of the feeding mechanism 350 pivoting. This means the peg 602 will be prevented from disengaging from the notch 708.

Reference will now be made to Figure 14 which shows a schematic underneath plan view of the spool 204. Figure 14 is the same as Figures 9, 10, 11, 12 and 13 except that the peg 602 is engaging the notch 708 and the moveable locking mechanism 220 is in locked position. This means that if the feeding mechanism 350 experiences dynamic vibrations, the peg 602 can hit the notch 708 and jump free from the notch 708. However, the feeding mechanism 350 is prevented from pivoting completely and causing the peg 602 to disengage from the notch 708 because the locking lever 250 will block and prevent the second pivotable arm 605 from pivoting towards the periphery of the spool 204. This means that the feeding mechanism 350 will not "bounce" as the peg 602 engages the notch 708 and cause the feeding mechanism 350 to accidentally feed. This means that cutting line 116 is conserved when operating the string trimmer 100.

Figure 14 shows a schematic underneath plan view of the spool 204 with the moveable locking mechanism 220 in the locking position. Figure 14 shows the second pivotable arm 605 and the counterweight 607 of feeding mechanism 350 before being urged towards the periphery of the spool 204.

When a force is exerted on the cutting line 116, this causes the pivoting eyelet 214 to pivot about the axis of the moveable locking mechanism 220. For example the user has placed the cutting head 102 in the proximity of heavy vegetation which is causing the pivoting eyelet 214 to pivot. At the same time the moveable locking mechanism 220 also pivots and the locking lever 250 pivots from the release position to the locking position.

When in the locking position the locking lever 250 prevents the feeding mechanism 350 from pivoting through its full extent. The locking lever 250 abuts the second pivotable arm 605 at a point mid way in the path of the second pivotable arm 605. By restricting the movement of the second pivotable arm 605, the movement of the first pivotable arm 603 is also restricted. In particular the first pivotable arm 603 is prevented from moving along the full face of the notch 708. This means that the peg 602 cannot move free from the notch 708. Therefore irrespective of whether the counterweight 607 is unbalanced and more cutting line 116 could be fed out, no cutting line 116 is fed because the feeding mechanism 350 is locked by the moveable locking mechanism 220. The feeding mechanism 350 will be prevented from feeding so long as the moveable locking mechanism 220 is in the locked position. When the external force is removed from the cutting line 116, the moveable locking mechanism 220 will return to the release position. Only when the external force is removed from the cutting line, will the feeding mechanism 350 be able to feed out more line.

In this way in some embodiments where the pivoting eyelet is integral with the locking lever 250 and the guiding arm 360, the moveable locking mechanism 220 can be actuated by either the guiding arm 360 interacting with the external camming surface 370 or an external force being exerted on the pivoting eyelet 214.

Figure 14 shows the moveable locking mechanism 220 in the locked position. In normal operation when no external forces are exerted on the cutting line 116, the moveable locking mechanism 220 will return to the release position as shown in Figure 9. The moveable locking mechanism 220 will return to the release position where the locking lever does not block the feeding mechanism 350 by virtue of centrifugal force on the cutting line 116. The centrifugal force on the cutting line 116 is a restoring force and will cause the pivoting eyelet 214 to return to the neutral position. The pivoting of the pivoting eyelet 214 will cause the moveable locking mechanism 220 to return to the release position.

When the peg 602 engages with the notch 708, if the mass of the cutting line 116 is insufficient to balance against the counterweight 607, the feeding mechanism 350 will again pivot and feed more line out repeating the process described in Figures 9 to 14. The spool 204 will stop rotating when sufficient cutting line 116 has been dispensed and the counterweight 607 is balanced against the free end of the cutting line 116. At this point the feeding mechanism 350 is not able to pivot and no additional cutting line 116 will be fed out.

Alternatively or additionally in some embodiments the moveable locking mechanism 220 is biased with a spring or the like to urge the moveable locking mechanism 220 to the release position. In some embodiments the pivoting eyelet 214 is not used and a spring will be used instead.

Figure 14 shows the moveable locking mechanism 220 in a position with respect to the external camming surface 370 whereby the moveable locking mechanism 220 can pivot without the guiding arm 360 engaging camming surface 370. This means that the moveable locking mechanism 220 can freely rotate without being impeded by the spool 204.

In some embodiments the moveable locking mechanism 220 is dampened. In this way the responsiveness of the moveable locking mechanism 220 returning to the release position from the locking position when the guiding arm 360 has disengaged from the external camming surface 370 is increased.

Reference will now be made to Figure 15. Figure 15 shows a schematic underneath plan view of the spool 204. Figure 15 shows an alternative embodiment whereby the moveable locking mechanism 220 do not comprise the pivoting eyelet. The moveable locking mechanism 220 comprises the guiding arm 360 and the locking lever 250. The guiding arm 360 engages with the external camming surface in the same way as described in respect of the previous embodiments. Similarly the locking lever 250 engages with the feeding mechanism 350 in the same way as described in the previous embodiments. The cutting line 116 projects from the cutting head 102 at a position remote from the moveable locking mechanism 220. This means that moveable locking mechanism 220 pivots as a result of the interaction between the guiding arm 360 and the external camming surface 370.

The profile of the external camming surface 370 means that a spool with a circular lower flange will not work with the moveable locking mechanism 220. If a spool with a circular lower flange was used with the feeding mechanism 220, the diameter of the circle is defined by the internal track 702 which guides the peg 602. The minimum diameter circle for the flange of the spool incorporating an internal track 702 is shown by the dotted line D. However since the spool also has a circular lower flange, the external diameter of the circular lower flange at a minimum must also be D. This means that the guiding arm 360 will engage with the external surface of the circular lower flange. As shown in Figure 15, the minimum circular diameter D corresponds to the point on the external camming surface whereby the guiding arm 360 urges the moveable locking mechanism 220 into the locking position. In this way, even if a spool with a circular lower flange were used with the feeding mechanism 350 and the moveable locking mechanism 220, the moveable locking mechanism would be permanently in the locking position.

Advantageously this means that only certain types of spool can be used with the moveable locking mechanism 360. This will prevent inappropriate spools and cutting lines being used with the string trimmer 100 and reduce the damage caused to the string trimmer.

In some embodiments the moveable locking mechanism 220 is will move only when the external force exceeds a predetermined force. For example the friction between the moveable locking mechanism 220 and the mounting clip 310 can be increased. This means that in some embodiments, the moveable locking mechanism 220 will move to the locked position when the cutting line 116 is deflected by placing the cutting head 102 next to heavy vegetation.

In some embodiments an engaging face of the locking lever 250 configured to engage with the feeding mechanism comprises means for increasing a friction. The means for increasing friction can be grooves, or a rough surface or any means suitable for increasing the friction between the engaging faces of the locking lever 250 and the feeding mechanism 350.

Figures 9 to 14 show that the outer surface of the second pivotable arm 605 comprises a smooth arcuate shape. However in some embodiments the second pivotable arm can comprise a projection 720 as shown in Figure 7 for catching the locking lever. The projection 720 means that the feeding mechanism 350 and the locking lever 250 are less likely to accidentally disengage.

Embodiments of the present invention have been discussed with particular reference to the examples illustrated. However it will be appreciated that variations and modifications may be made to the examples described within the scope of the appended claims.

## Claims

1. A spool (204) for a rotatable cutting head (102) for a vegetation cutting device (100) comprising:
a central portion for receiving a cutting line (116) wound thereon; and
a flange (330) connected at one end of the central portion wherein the flange comprises:
an internal track (702) on a base of the flange (330) configured to guide a peg (602) of a cutting line feeding mechanism (350) in a cap (118) of a cutting head (102), the internal track (702) comprising at least one notch (708) for engaging the peg (602) and preventing relative motion between the cutting head (102) and the spool (204),
**characterised in that** there is also provided at least one external camming surface (370) on a peripheral edge of the flange (330), the camming surface configured to engage with a moveable locking mechanism (220) as the spool (204) rotates relative to the cutting head (102) and cause the moveable locking mechanism to move between a release position in which the locking mechanism (220) does not engage the cutting line feeding mechanism (350) and a locked position wherein the locking mechanism (220) engages the cutting line feeding mechanism (350) and limits relative movement between the cutting head (102) and the spool (204).

2. A spool according to claim 1 wherein the at least one notch (708) is a plurality of notches.

3. A spool according to claims 1 or 2 wherein the at least one external camming surface (370) is a plurality of external camming surfaces.

4. A spool according to any of claims 1 to 3 wherein the number of notches (708) is the same as the number of external camming surfaces (370).

5. A spool according to any of claims 1 to 4 wherein the at least one external camming surface (370) is configured to engage with the moveable locking mechanism (220) before the at least one notch (708) of the internal track (702) is configured to engage with the peg (602) when the spool (204) rotates with respect to the cutting head (102).

6. A spool according to any of claims 1 to 5 wherein the at least one camming surface (370) is configured to disengage with the moveable locking mechanism (220) before the at least one notch (708) of the internal track (702) is configured to engage with the peg (602) when the spool (204) rotates with respect to the cutting head (102).

7. A spool according any of claims 1 to 6 wherein the external camming surface (370) projects from the flange (330).

8. A rotatable cutting head (102) for a vegetation cutting device (100) comprising:
The spool (204) as claimed in claim 1, wherein a free end of the cutting line (116) is arranged to exit the cutting head (102) via an opening;
a cap (118) comprising a feeding mechanism (350), the feeding mechanism comprising a peg (602) engageable with the spool (204) and configured to allow the spool to rotate relative to the cutting head and feed cutting line (116) from the spool when the free end is shorter than a predetermined length; and
a moveable locking mechanism (220) moveable between a locking position in which the locking mechanism engages the cutting line feeding mechanism (350) and limits relative movement between the cutting head (102) and the spool (204) and a release position in which the locking mechanism (220) does not engage the cutting line feeding mechanism (350).

9. A rotatable cutting head according to claim 8 wherein the feeding mechanism (350) comprises a moveable counterweight (607) for balancing centrifugal forces of a predetermined length of the free end of the cutting line (116), wherein the counterweight is moveable between a balanced position in which the counterweight prevents relative movement of the spool (204) with respect to the cutting head (102) and an unbalanced position in which the counterweight (607) allows relative movement of the spool with respect to the cutting head.

10. A cutting head according to claim 9 wherein the counterweight (607) is coupled to the peg (602) and movement of the counterweight causes movement of the peg with respect to the spool (204).

11. A cutting head according to claims 9 or 10 wherein the moveable locking mechanism (220) comprises a locking lever (250) for engaging with the counterweight (607).

12. A cutting head according to claims 8 to 11 wherein the moveable locking mechanism (220) comprises a guide arm (360) for engaging the external camming surface (370).

13. A cutting head according to claim 12 wherein the guide arm (360) is integral with the locking lever (250).

14. A cutting head according to any of claims 8 to 13 wherein the moveable locking mechanism (220) comprises a pivoting eyelet (214) for receiving the cutting line (116) and the pivoting eyelet (214) is configured to move the moveable locking mechanism (220) between the release position to the locked position.

## Patentansprüche

1. Spule (204) für einen drehbaren Schneidkopf (102) für ein Bewuchsschneidegerät (100), umfassend:
einen zentralen Abschnitt zum Aufnehmen einer Schneidleine (116), die darauf gewickelt ist; und
einen Flansch (330), der an einem Ende des zentralen Abschnitts verbunden ist, wobei der Flansch folgendes umfasst:
eine Innenbahn (702) an einer Basis des Flanschs (330), die zum Führen eines Stifts (602) eines Schneidleinenzufuhrmechanismus (350) in einer Kappe (118) eines Schneidkopfs (102) ausgelegt ist, wobei die Innenbahn (702) mindestens eine Kerbe (708) zur Ineingriffnahme des Stifts (602) und zum Verhindern von relativer Bewegung zwischen dem Schneidkopf (102) und der Spule (204) umfasst,
**dadurch gekennzeichnet, dass** außerdem mindestens eine externe Nockenfläche (370) an einer Umfangskante des Flanschs (330) vorgesehen ist, wobei die Nockenfläche zur Ineingriffnahme mit einem beweglichen Sperrmechanismus (220), wenn die Spule (204) bezüglich des Schneidkopfs (102) dreht, und zum Bewirken ausgelegt ist, dass sich der bewegliche Sperrmechanismus zwischen einer Freigabeposition, in der der Sperrmechanismus (220) nicht mit dem Schneidleinenzufuhrmechanismus (350) in Eingriff tritt, und einer gesperrten Position bewegt, in der der Sperrmechanismus (220) mit dem Schneidleinenzufuhrmechanismus (350) in Eingriff tritt und relative Bewegung zwischen dem Schneidkopf (102) und der Spule (204) begrenzt.

2. Spule nach Anspruch 1, wobei die mindestens eine Kerbe (708) eine Vielzahl von Kerben ist.

3. Spule nach einem der Ansprüche 1 oder 2, wobei die mindestens eine externe Nockenfläche (370) eine Vielzahl von externen Nockenflächen ist.

4. Spule nach einem der Ansprüche 1 bis 3, wobei die Anzahl von Kerben (708) dieselbe wie die Anzahl von externen Nockenflächen (370) ist.

5. Spule nach einem der Ansprüche 1 bis 4, wobei die mindestens eine externe Nockenfläche (370) zur Ineingriffnahme mit dem beweglichen Sperrmechanismus (220) ausgelegt ist, bevor die mindestens eine Kerbe (708) der Innenbahn (702) zur Ineingriffnahme mit dem Stift (602) ausgelegt ist, wenn die Spule (204) bezüglich des Schneidkopfs (102) dreht.

6. Spule nach einem der Ansprüche 1 bis 5, wobei die mindestens eine Nockenfläche (370) zum Lösen vom beweglichen Sperrmechanismus (220) ausgelegt ist, bevor die mindestens eine Kerbe (708) der Innenbahn (702) zur Ineingriffnahme mit dem Stift (602) ausgelegt ist, wenn die Spule (204) bezüglich des Schneidkopfs (102) dreht.

7. Spule nach einem der Ansprüche 1 bis 6, wobei die externe Nockenfläche (370) vom Flansch (330) vorsteht.

8. Drehbarer Schneidkopf (102) eines Bewuchsschneidegeräts (100), umfassend:
die Spule (204) gemäß Anspruch 1, wobei ein freies Ende der Schneidleine (116) zum Austritt aus dem Schneidkopf (102) über eine Öffnung angeordnet ist;
eine Kappe (118), die einen Zufuhrmechanismus (350) umfasst, wobei der Zufuhrmechanismus einen Stift (602) umfasst, der mit der Spule (204) in Eingriff bringbar ist, und zum Ermöglichen ausgelegt ist, dass die Spule bezüglich des Schneidkopfs dreht und Schneidleine (116) von der Spule zuführt, wenn das freie Ende kürzer als eine vorgegebene Länge ist; und
einen beweglichen Sperrmechanismus (220), der zwischen einer Sperrposition, in der der Sperrmechanismus den Schneidleinenzufuhrmechanismus (350) in Eingriff nimmt und relative Bewegung zwischen dem Schneidkopf (102) und der Spule (204) begrenzt, und einer Freigabeposition beweglich ist, in der der Sperrmechanismus (220) den Schneidleinenzufuhrmechanismus (350) nicht in Eingriff nimmt.

9. Drehbarer Schneidkopf nach Anspruch 8, wobei der Zufuhrmechanismus (350) ein bewegliches Gegengewicht (607) zum Ausgleichen von Zentrifugalkräften einer vorgegebenen Länge des freien Endes der Schneidleine (116) umfasst, wobei das Gegengewicht zwischen einer ausgeglichenen Position, in der das Gegengewicht relative Bewegung der Spule (204) bezüglich des Schneidkopfs (102) verhindert, und einer unausgeglichenen Position beweglich ist, in der das Gegengewicht (607) relative Bewegung der Spule bezüglich des Schneidkopfs ermöglicht.

10. Schneidkopf nach Anspruch 9, wobei das Gegengewicht (607) an den Stift (602) gekuppelt ist und Bewegung des Gegengewichts Bewegung des Stifts bezüglich der Spule (204) bewirkt.

11. Schneidkopf nach einem der Ansprüche 9 bis 10, wobei der bewegliche Sperrmechanismus (220) einen Sperrhebel (250) zur Ineingriffnahme des Gegengewichts (607) umfasst.

12. Schneidkopf nach einem der Ansprüche 8 bis 11, wobei der bewegliche Sperrmechanismus (220) einen Führungsarm (360) zur Ineingriffnahme der externen Nockenfläche (370) umfasst.

13. Schneidkopf nach Anspruch 12, wobei der Führungsarm (360) mit dem Sperrhebel (250) einstückig ist.

14. Schneidkopf nach einem der Ansprüche 8 bis 13, wobei der bewegliche Schneidmechanismus (220) eine Schwenköse (214) zum Aufnehmen der Schneidleine (116) umfasst, und wobei die Schwenköse (214) zum Bewegen des beweglichen Sperrmechanismus (220) zwischen der Freigabeposition und der Sperrposition ausgelegt ist.

## Revendications

1. Bobine (204) pour une tête de coupe rotative (102) destinée à un dispositif de coupe de végétation (100) comprenant :
une partie centrale pour recevoir une ligne de coupe (116) qui y est enroulée ; et
une bride (330) raccordée à une extrémité de la partie centrale, dans laquelle la bride comprend :
une piste interne (702) sur une base de la bride (330) configurée pour guider une clavette (602) d'un mécanisme d'alimentation en ligne de coupe (350) dans une coiffe (118) d'une tête de coupe (102), la piste interne (702) comprenant au moins une encoche (708) pour y engager la clavette (602) et empêcher un mouvement relatif entre la tête de coupe (102) et la bobine (204),
**caractérisée en ce qu'**il est également prévu au moins une surface de came externe (370) sur un bord périphérique de la bride (330), la surface de came étant configurée pour s'engager sur un mécanisme de verrouillage mobile (220) lorsque la bobine (204) tourne par rapport à la tête de coupe (102) et amener le mécanisme de verrouillage mobile à se déplacer entre une position de libération, dans laquelle le mécanisme de verrouillage (220) ne s'engage pas sur le mécanisme d'alimentation en ligne de coupe (350), et une position verrouillée, dans laquelle le mécanisme de verrouillage (220) s'engage sur le mécanisme d'alimentation en ligne de coupe (350) et limite le mouvement relatif entre la tête de coupe (102) et la bobine (204).

2. Bobine selon la revendication 1, dans laquelle la au moins une encoche (708) est une pluralité d'encoches.

3. Bobine selon les revendications 1 ou 2, dans laquelle la au moins une surface de came externe (370) est une pluralité de surfaces de came externes.

4. Bobine selon l'une quelconque des revendications 1 à 3, dans laquelle le nombre d'encoches (708) est le même que le nombre de surfaces de came externes (370).

5. Bobine selon l'une quelconque des revendications 1 à 4, dans laquelle la au moins une surface de came externe (370) est configurée pour s'engager sur le mécanisme de verrouillage mobile (220) avant que la au moins une encoche (708) de la piste interne (702) ne soit configurée pour s'engager sur la clavette (602) lorsque la bobine (204) tourne par rapport à la tête de coupe (102).

6. Bobine selon l'une quelconque des revendications 1 à 5, dans laquelle la au moins une surface de came (370) est configurée pour se dégager du mécanisme de verrouillage mobile (220) avant que la au moins une encoche (708) de la piste interne (702) ne soit configurée pour s'engager sur la clavette (602) lorsque la bobine (204) tourne par rapport à la tête de coupe (102).

7. Bobine selon l'une quelconque des revendications 1 à 6, dans laquelle la surface de came externe (370) fait saillie de la bride (330).

8. Tête de coupe rotative (102) pour un dispositif de coupe de végétation (100) comprenant :
la bobine (204) selon la revendication 1, dans laquelle une extrémité libre de la ligne de coupe (116) est agencée pour sortir de la tête de coupe (102) via une ouverture ;
une coiffe (118) comprenant un mécanisme d'alimentation (350), le mécanisme d'alimentation comprenant une clavette (602) qui peut s'engager sur la bobine (204) et est configurée pour permettre à la bobine de tourner par rapport à la tête de coupe et de fournir la ligne de coupe (116) de la bobine lorsque l'extrémité libre est plus courte qu'une longueur prédéterminée ; et
un mécanisme de verrouillage mobile (220) mobile entre une position de verrouillage, dans laquelle le mécanisme de verrouillage s'engage sur le mécanisme d'alimentation en ligne de coupe (350) et limite le mouvement relatif entre la tête de coupe (102) et la bobine (204) et une position de libération, dans laquelle le mécanisme de verrouillage (220) ne se dégage pas du mécanisme d'alimentation en ligne de coupe (350).

9. Tête de coupe rotative selon la revendication 8, dans laquelle le mécanisme d'alimentation (350) comprend un contrepoids mobile (607) pour équilibrer les forces centrifuges d'une longueur prédéterminée de l'extrémité libre de la ligne de coupe (116), dans laquelle le contrepoids est mobile entre une position équilibrée, dans laquelle le contrepoids empêche un mouvement relatif de la bobine (204) par rapport à la tête de coupe (102) et une position non équilibrée, dans laquelle le contrepoids (607) permet un mouvement relatif de la bobine par rapport à la tête de coupe.

10. Tête de coupe selon la revendication 9, dans laquelle le contrepoids (607) est couplé à la clavette (602) et le mouvement du contrepoids provoque le mouvement de la clavette par rapport à la bobine (204).

11. Tête de coupe selon les revendications 9 ou 10, dans laquelle le mécanisme de verrouillage mobile (220) comprend un levier de verrouillage (250) pour s'engager sur le contrepoids (607).

12. Tête de coupe selon les revendications 8 à 11, dans laquelle le mécanisme de verrouillage mobile (220) comprend un bras de guidage (360) pour s'engager sur la surface de came externe (370).

13. Tête de coupe selon la revendication 12, dans laquelle le bras de guidage (360) fait partie intégrante du levier de verrouillage (250).

14. Tête de coupe selon l'une quelconque des revendications 8 à 13, dans laquelle le mécanisme de verrouillage mobile (220) comprend un oeillet de pivotement (214) pour recevoir la ligne de coupe (116) et l'oeillet de pivotement (214) est configuré pour déplacer le mécanisme de verrouillage mobile (220) entre la position de libération et la position verrouillée.
